# EUROPEAN PATENT APPLICATION

(11) **EP 4 683 153 A1**
(43) Date of publication of application: **21.01.2026**
(21) Application number: 24315350.9
(22) Date of filing: 19.07.2024
(51) Int. Cl.: H02J 3/32, H02J 7/00, B60L 53/53, H02J 9/06

(54) **METHOD FOR CONTROLLING AN ELECTRIC VEHICLE CHARGING STATION FOR POWERING A DOMESTIC ELECTRIC GRID AND POWER SUPPLY SYSTEM FOR POWERING SUCH A DOMESTIC ELECTRIC GRID**

(71) Applicant: HAGER-ELECTRO SAS, 67210 Obernai (FR)
(72) Inventor: Reiner, Ulrich, 67691 HOCHSPEYER (DE); Raubuch, Sebastian, 66663 MERZIG (DE)
(74) Representative: Ipsilon

(57) **Abstract**

The present invention concerns a method for controlling a vehicle charging station for powering a domestic electric grid, more particularly a house/building domestic electric grid, connected to said vehicle charging station, in a context of powering the domestic electric grid without any power grid or with a power grid failure, the method using a power supply system comprising at least a power assembly comprising an electric vehicle, an electric vehicle charging station (2), which charging station (2) comprises a buffer energy storage (2b), wherein the method comprises the following steps for controlling the charging station (2) : initiating powering and recharging of the buffer energy storage (2b) with electrical energy stored in the electric vehicle battery using a second supply mode, when the charge level is reached or initially reached, initiating the supply of electrical energy stored in the electric vehicle battery to the domestic electric grid (3) using a first supply mode.

## Description

The present invention relates to the field of supplying electrical energy to a domestic electric grid, in particular a domestic electric grid supplying a house/building, from electrical energy stored in an electric vehicle. The object of the invention is a method for controlling an electric vehicle charging station for powering a domestic electric grid. It also concerns a power supply system for powering such a domestic electric grid. The power system allows the implementation of said method.

More particularly, the present invention applies in a context of powering a domestic electric grid, such as a domestic electric grid of a house/building, without any connection to a power grid, or in a context of powering the domestic electric grid connected to a power grid in case of a power grid failure/power outage. In the present application:

- "house" (or "home") refers to a building designed for people to live in, which can serve as a residence for individuals, families, or groups, and may include various structures such as, for example, single-family homes, duplexes, apartments, and townhouses. "Building" refers a broader category of houses that serve various purposes beyond residential living as a house such as commercial, industrial, or institutional purposes, office complexes, factories, and school. "House" and "building" usually stand permanently in one place,

- "power grid" refers to a network/grid of interconnected electrical generation, transmission, and distribution systems that delivers electricity from power plants to houses, buildings, and other end users, ensuring a reliable and efficient supply of electrical power,

- "domestic electric grid" refers to the internal system of wiring and electrical components within a physical structure such as a house/building, connected to the external power grid, which distributes electricity throughout the premises for various uses such as, for example, lighting, heating, and powering appliances.

We know that electric vehicle batteries can provide mobile energy storage and are an important part of an environmentally sustainable future, in particular by supplying electricity to appliances or domestic electric grids.

To this end, systems exist using an electric vehicle to provide power to a destination other than the electric vehicle. Such systems typically include an electric vehicle adapted to receive, via a charging cable, electrical energy (known by the acronym EV) from a charging station/point, and to store the electrical energy received in a battery of the electric vehicle and to discharge said stored electrical energy outside the electric vehicle for providing power to a destination other than the electrical vehicle such as an appliance or domestic electric grid.

One of these known systems utilizes a V2L (vehicle to load) mode, incorporating an electric vehicle adapted for said V2L mode/technology and a charging cable designed to transfer electrical energy between the electric vehicle and external equipment such as, for example, a refrigerator, lamp or a coffee machine. V2L enables the electric vehicle to supply electrical power to external devices from its battery, allowing the vehicle's battery to serve as a power source for various appliances and even for charging other electric vehicles. In the event of a power grid failure, the electric vehicle can function as a mobile power source, enabling direct connection of essential appliances like refrigerators or lamps to the vehicle via the V2L charging cable, ensuring operational continuity utilizing the stored energy capacity of its battery. However, V2L mode is configured for powering of only one device/apparatus and is not provided to be used to power a domestic electric grid. In V2L mode, electric power is supplied in the form of alternating current having a phase which is unsynchronized with a phase of the domestic electric grid and/or a phase of the power grid.

Other system exist which allow to power a domestic electric grid, such a domestic electric grid of a house/building, from an electric vehicle. Such a system uses V2H/V2B (vehicle to home/vehicle to building) mode and further comprises a charging station (EVSE) connected to the electrical vehicle via a charging cable. The electric vehicle and the charging station are adapted for the V2H/V2B mode which is controlled by the charging station. Two forms of V2H/V2B are known: grid-following V2H/V2B and grid-forming V2H/V2B. In the latter case, no power grid is necessary, the electric vehicle establishing itself the power grid or generating directly and autonomously a current at the power grid frequency (for example 5O Hz) without voltage reference from the grid upstream, i.e. without synchronization with a power grid. V2H/2B mode enables electric vehicles to be electrically charged, but also to transfer energy to the house/building from the electric vehicle battery. More particularly V2H/2B allows to provide backup power by ensuring a continuous power supply to the physical structure during power grid failures (black-out, outage) or in the absence of any power grid. To enable said backup power in the event of a grid failure, the V2H/2B mode controlled by the charging station is configured to detect the power grid failure and to isolate it from the domestic electric grid, generally by using an automatic contactor (switch). The V2H/2B also brings other well-known advantages in its use, allowing the user, for example, to manage energy consumption by using the vehicle's energy in the most expensive periods (peak electricity prices) and recharging the vehicle's battery in the least expensive periods.

In such a system using V2H/2B mode the vehicle charging station comprises an initiating buffer module which usually comprises a buffer battery and an electronic control circuit (processor) configured to be powered by the buffer battery and configured to initiate, while being powered by the buffer battery, the supply of electrical energy stored in the electric vehicle battery to the domestic electric grid according to the supply mode V2H/V2B. The buffer battery is usually a chemical battery and relatively small compared to the vehicle's battery but designed to store enough energy to power the electronic control circuit and essential components of the charging station, such as control circuits, and communication devices. Under normal conditions, when the grid power is available, the buffer battery is kept charged by the mains supply and remains on standby, ready to take over in the event of a power grid failure. When a power grid failure is detected, the charging station immediately triggers/initiates the transition to the buffer battery. However, such a chemical battery is expensive and can deteriorate over time, for instance by wear.

However, a significant drawback is that when the buffer battery is empty, more particularly in the case where the buffer battery has deteriorated over time. In that case, the processor is no longer powered by the buffer battery and is then no longer in capacity to initiate the V2H/V2B mode. As a result, in the event of a power grid failure, and particularly in the case of a buffer battery which has deteriorated over time, the V2H/V2B mode does not function, leaving the domestic electric grid without any power.

The purpose of the present invention is to overcome these drawbacks.

At this end, the present invention has for its object a method for controlling an electric vehicle charging station for powering a domestic electric grid, more particularly a house/building domestic electric grid, in a context of powering the domestic electric grid without any connection to a power grid or in a context of powering the domestic electric grid connected to the power grid in case of a power grid failure, the method using a power supply system comprising at least one power assembly comprising:
- an electric vehicle comprising a battery,
- an electric vehicle charging station connected to the domestic electric grid, more particularly the house/building domestic electric grid, and to the electric vehicle and, where applicable, to a power grid,

which charging station comprises an initiating buffer module comprising a buffer energy storage and an electronic control circuit configured to be powered by the buffer energy storage and configured to initiate, while being powered by the buffer energy storage, the supply of electrical energy stored in the electric vehicle battery to the domestic electric grid according to a first supply mode if the amount of power which is stored in the buffer energy storage is equal to or above a threshold charge level,
the power assembly being adapted for using the electrical energy stored in the electric vehicle battery to power the charging station according to a second supply mode,
wherein the method comprises the following steps for controlling the electric vehicle charging station:
   i) initiating powering and recharging of the buffer energy storage with electrical energy stored in the electric vehicle battery using the second supply mode until reaching at least the threshold charge level,
   ii) when the threshold charge level is reached, initiating the supply of electrical energy stored in the electric vehicle battery to the domestic electric grid using the first supply mode.

The present invention also concerns a power supply system, according to the present invention, for powering a domestic electric grid, more particularly a house/building domestic electrical grid, in a context of powering the domestic electric grid without any connection to a power grid or in a context of powering the domestic electric grid connected to the power grid in case of a power grid failure, the power system comprising at least a power assembly comprising :
- an electric vehicle comprising a battery,
- a vehicle charging station connected to the domestic electric grid, more particularly the house/building domestic electrical grid, and to the electric vehicle and, where applicable, to a power grid,

which charging station comprises an initiating buffer module comprising a buffer energy storage and an electronic control circuit configured to be powered by the buffer energy storage and configured to initiate, while being powered by the buffer energy storage, the supply of electrical energy stored in the electric vehicle battery to the domestic electric grid according to a first supply mode when the amount of power which is stored in the buffer energy storage is above a threshold charge level,
wherein the power assembly:
   - is adapted to supply the charging station with electrical energy stored in the electric vehicle battery according to a second supply mode for powering and recharging the buffer energy storage with electrical energy stored in the electric vehicle battery,
   - and comprises a control device for initiating recharging the buffer energy storage using the second supply mode,
and wherein the electric vehicle is adapted for use in the first and second supply modes.

The present invention also concerns a charging cable for such a power supply system according to the present invention, said charging cable being adapted to connect, in the power assembly of said power supply, the electric vehicle to the charging station,
wherein said charging cable:
- is adapted to enable the transfer of electrical energy from the electric vehicle to the charging station from according to the first and second supply modes,
- comprises an adapter enabling the electric vehicle to detect the second supply mode when the second supply mode is initiated by the control device of the power assembly.

The invention will be better understood from the following description, which relates to a preferred embodiment, given by way of non-limiting example, and explained with reference to the annexed schematic drawings, in which:
Fig. 1 is a schematic overview of a power supply system according to the present invention for a domestic electric grid connected to a vehicle charging station of a power assembly of said power supply system,
Fig. 2 is a perspective view of a charging station and a charging cable of a power assembly of the power supply system according to the present invention, with the charging cable connected to the charging station,
Fig. 3 shows schematically the internal components of a charging station and of the connector of a charging cable represented in figures 1 and 2, with their electrical connections,
Fig. 4 is a schematic representation of an example of the process steps of the method according to the present invention.

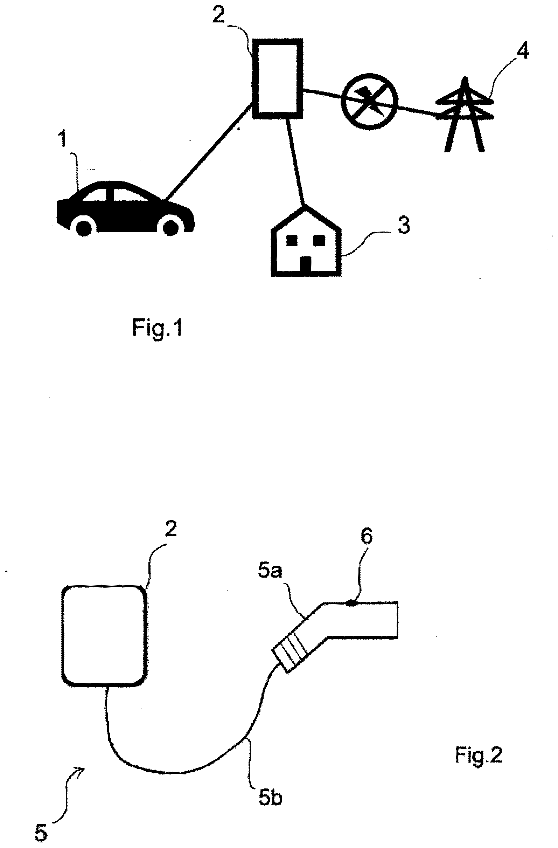

Figures 1 to 3 illustrate a power supply system, according to the present invention, for a domestic electric grid, more particularly a house/building domestic electrical grid, in a context of powering the domestic electric grid without any connection to a power grid or in a context of powering the domestic electric grid connected to the power grid in case of a power grid failure.

The power supply system comprising at least a power assembly comprising:
- an electric vehicle 1 comprising a battery (non-shown),
- a vehicle charging station 2 connected to a domestic electric grid 3, more particularly a house/building domestic electrical grid 3, and to the electric vehicle 1 and, where applicable, to a power grid 4.

"Where applicable, to a power grid 4" means that the place on which the domestic electric grid 3 is installed includes a power grid 4 supplying the house/ building. "Power grid" refers to a network of interconnected electrical generation, transmission, and distribution systems that delivers electricity from power plants to houses, buildings, and other end users, ensuring a reliable and efficient supply of electrical power.

"House" (or "home") refers to a building designed for people to live in, which can serve as a residence for individuals, families, or groups, and may include various structures such as single-family homes, duplexes, apartments, and townhouses. "Building" refers to a broader category that serve various purposes beyond residential living as a house such as commercial, industrial, or institutional purposes, office complexes, factories, and school. "House" and "building" may be stand permanently or temporally in one place.

"Ddomestic electric grid" refers to the internal system of wiring and electrical components within the house/building, connected to the power grid, which distributes electricity throughout the premises for various uses such as lighting, heating, and powering appliances.

The charging station 2 can be bidirectional by being adapted to charge the electric vehicle 1 from a power grid 4, but also to control the electricity supply of the domestic electric grid 3 using the energy stored in the electric vehicle battery.

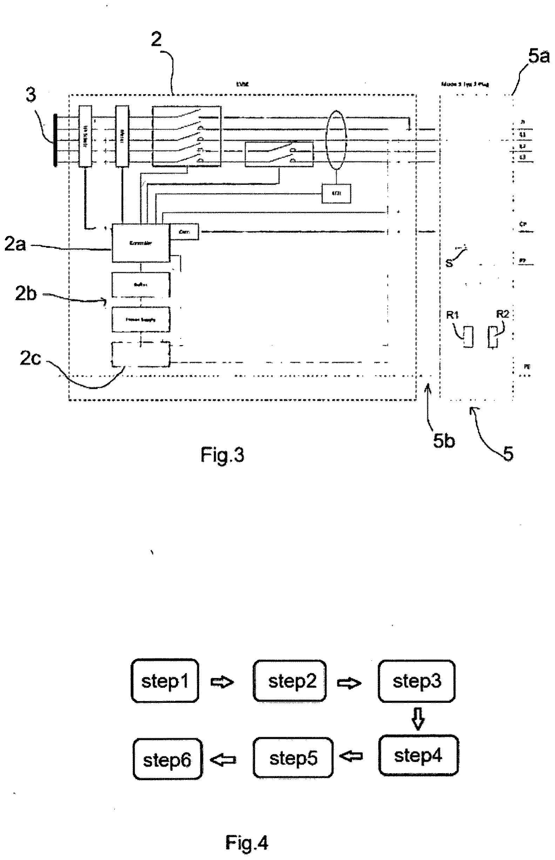

According to the present invention, as we can be seen more particularly in figure 3, the electric vehicle charging station 2 comprises an initiating buffer module comprising a buffer energy storage 2b and an electronic control circuit 2a, such as a processor or microcontroller, configured to be powered by the buffer energy storage 2b and configured to initiate, while being powered by the buffer energy storage 2b, the supply of electrical energy stored in the electric vehicle battery to the domestic electric grid 3 according to a first supply mode when the amount of power which is stored in the buffer energy storage 2b is above a threshold charge level. Preferably, the buffer energy storage 2b may be a capacitor.

The first supply mode may correspond to the operation of a known type of V2H/V2B (vehicle to home / vehicle to building) mode. The electric vehicle 1 and the charging station 2 are adapted for this V2H/V2B mode which is controlled by the charging station 2.

V2H/2B mode enables the electric vehicle 1 to be electrically charged according to a charging mode, but also to transfer energy to the domestic electric grid 3 from the electric vehicle battery according to the first supply mode. More particularly V2H/2B allows to provide backup power by ensuring a continuous power supply to the ddomestic electric grid 3 during grid failures (grid black-out, grid outage) or in the absence of any power grid 4. To enable said backup power in the event of a grid failure, the V2H/2B mode controlled by the charging station 2 is configured to detect the power grid failure and to isolate it from the domestic electric grid 3. The V2H/2B also brings other well-known advantages in its use, allowing the user, for example, to manage energy consumption by using the vehicle's energy in the most expensive periods (peak electricity prices) and recharging the vehicle's battery in the least expensive periods.

Two known forms of V2H/V2B may be set up: grid-following V2H/V2B and grid-forming V2H/V2B:
- in the grid-following V2H/V2B, which necessitates a power grid 4, synchronization between the power from the electric vehicle 1 and the power of the power grid 4 is necessary to ensure seamless and safe power delivery to the domestic electric grid 3. This synchronization prevents any phase mismatch, which could cause power quality issues or damage to electrical appliances and ensures that the AC power generated by the electrical vehicle 1 aligns precisely with the power of the power grid 4 in terms of both voltage amplitude and frequency. Once synchronization is achieved, the power from the electric vehicle 1 can seamlessly flow into the domestic electric grid 3 in conjunction with the power grid 4. If a power grid outage occurs, the power supply system of the present invention can quickly transition to the first supply mode (backup mode) where the electric vehicle 1 becomes a primary power source for the domestic electric grid 3. The buffer energy storage 2b ensures a smooth transition, maintaining a continuous power supply to critical loads without interruption,
- in the grid-forming V2H/V2B, no power grid is necessary, the electric vehicle 1 establishing a microgrid, i.e. an autonomous power grid, by generating the necessary voltage, frequency, and phase, more particularly stable AC (Alternating Current) power at a standard frequency (for. example 50 Hz) suitable for house/building use. The electric vehicle 1 is adapted to convert the DC (Direct Current) power stored in its battery into AC power at the standard frequency suitable for house/building use.

The buffer energy storage 2b is configured to store enough energy to power essential components of the charging station 2, such as the electronic control circuit 2a, and other circuits such as control circuits and communication devices. Under normal conditions, when a grid power is available and connected to the charging station 2, the buffer energy storage 2b is kept charged by the mains supply from the power grid 4. When a power grid 4 failure is detected, the charging station 2 is adapted to immediately initiates/triggers, using the energy of the buffer energy storage 2b, the transition to the first supply mode. This capability allows the V2H/V2B mode to be initiated and maintained, ensuring that the energy stored in the electric vehicle battery can be used to power the domestic electric grid 3 even when the grid power 4 is unavailable. By providing a stable and continuous power supply, the buffer energy storage 2b also protects sensitive electronic components of the charging station 2 from power fluctuations that can occur during a power grid outage or power grid restoration. The buffer energy storage 2b can also provide temporary power during transitions or if the electric vehicle 1 needs to be temporarily disconnected or recharged.

The buffer energy storage 2b may have a energy capacity greater or equal to 0,2 Wh, preferably between 0,2 Wh and 20 Wh, even more preferably between 0,2 Wh and 10 Wh.

According to the present invention, the (or each) power assembly:
- is adapted to supply the electric vehicle charging station 2 with electrical energy stored in the electric vehicle battery according to a second supply mode for powering and recharging the buffer energy storage 2b (with electrical energy stored in the electric vehicle battery),
- and comprises a control device for initiating recharging the buffer energy storage 2b using the second supply mode.

The electric vehicle 1 is adapted for use in the first and second supply modes.

The second supply mode may correspond to an operation of the type of V2L (vehicle to load) mode. This V2L mode used in the present invention enables the electric vehicle 1 to supply electrical power stored in its battery to the charging station 2 and more particularly to the buffer energy storage 2b. It is then clear that the electric vehicle 1 of the power assembly may be adapted to set up such a V2L mode/technology.

Under anormal conditions, i.e. in a context of power grid failure/outage (then no longer allowing the power grid 4 to power and recharge the buffer energy storage 2b and more particularly in the case where the buffer energy storage 2b is a capacitor that discharges quickly, the present invention allows an operator, via the control device to initiate the recharging of the buffer energy storage 2b with the energy stored in the electric vehicle 1 using the second supply mode. The invention is therefore particularly useful since it thus allows a chemical buffer battery which is expensive, and which can deteriorate through wear to be replaced by a energy storage of the capacitor type which is less expensive and of reduced size.

The present invention is also particularly useful in the case where there is no power grid 4, for example in the case of a domestic electric grid 3 which is located in a remote or isolated location from residential (houses/buildings) or industrial sites, since it allows the buffer energy storage 2b to be recharged using the second supply mode. In addition, it also has the advantage of using a charging station with a buffer energy storage 2b of the capacitor type that is less expensive and less bulky than a chemical battery.

The charging station 2 may comprise a selector 2c (figure 3) connected to the electronic control circuit 2a and controlled by the latter to enable the charging station 2 to switch from:
- an operation mode corresponding to a charging mode of the electric vehicle 1 when the charging mode is detected by the electric vehicle 1 or to the second power supply mode when the second power supply mode is initiated by the control device,
- to an operation mode corresponding to the first power supply mode.

The control device may comprise a control element 6, such as a push button, for initiating the second supply mode. The control element 6 may be located on the charging station 2 or, as can be seen in figures 2, 3, on a charging cable 5 of the power system connecting the charging station 2 to the electric vehicle 1 or on a connector 5a of the charging cable 5. In another embodiment not illustrated in the annexed drawings the control device may comprise a remote control element, such as a smart phone.

The charging cable 5 may comprise a connector 5a connecting the charging cable 5 to the electric vehicle 1. Preferably, the control element 6, such as a push button, may be implemented on the connector 5a.

In an alternative embodiment not depicted in the figures, the second supply mode may be automatically initialized by a control unit, in particular when the control unit detects that the amount of power which is stored in the buffer energy storage 2b is below the threshold charge level and/or when the control unit detects that the domestic electric grid 3 is disconnected from the power grid 4 and/or in case of a power grid failure. The second supply mode may be automatically stopped by the control unit, in particular when the control unit detects that the amount of power which is stored in the buffer energy storage 2b is above the threshold charge level. The control unit may be present on the charging cable 5 or the charging station 2.

The control unit is preferably powered by a separate power storage device such as a battery. The power storage device may be charged when the charging station 2 is connected to the power grid 4 and/or when the charging cable 5 is connected to the charging station 2 while the charging station 2 is connected to the power grid 4. Alternatively, the power storage device may be charged through an independent power supply such as a solar panel. The solar panel may be present on the charging cable 5.

The connector 5a is compatible with the charging socket(s) 1 of the electric vehicle 1. The charging cable 5 is not only provided to transfer electrical power but also to transfer data communication between the electric vehicle 1 and the charging station 2, which may include information about the vehicle's battery status, charging parameters, and control signals for power flow management. The charging cable 5 may be connected permanently to the charging station 2 by being hardwired directly into the charging station 2 or through a detachable plug, opposite to the connector 5, inserted into a socket of the charging station 2. The plug/charging station 2 and the connector 5a may be connected by a flexible cable 5b.

As we can also see in figure 3, the connector 5a of such a charging cable 5 may include several key lines that ensure safe and efficient power transfer. These lines are known as PP (Proximity Pilot), PE (Protective Earth), and CP (Control Pilot) and are note described in detail in the present application. The PP line may allow to identify the charging cable 5 and its capacity. The PE line may provide grounding for safety. The CP line may manage communication between the electric vehicle 1 and the charging station 2. Together, these lines may enable a secure and reliable connection, facilitating effective power transfer and protecting both users and equipment from electrical hazards.

Preferably, the connector 5a may be designed to be robust, weather-resistant, and easy to use, with features such as ergonomic grips, locking mechanisms, and protective covers to ensure safe and reliable connections.

Preferably, the charging station 2 may comprise an indicator (not shown on the attached figures) configured to indicate visually and/or acoustically when the threshold load level is reached.

The present invention has also for its object a charging cable 5 for a power supply system according to the present invention. Said charging cable 5 is adapted to connect, in the power assembly of said power supply, the electric vehicle 1 to the charging station 2. Such a charging cable 5 may be a charging cable 5 described above.

According to the present invention said charging cable 5:
- is adapted to enable the transfer of electrical energy from the electric vehicle 1 (battery of the electric vehicle 1) to the charging station 2 according to the first and second supply modes,
- comprises an adapter enabling the electric vehicle 1 to detect the second supply mode when the second supply mode is initiated by the control device of the power assembly.

Preferably, the charging cable 5 may comprise the control device comprising a control element 6, such as a push button, and a switch S controlled by the control element 6, as described before, for initiating the second supply mode. Alternatively, as described before, the second supply mode may be initiated by the control unit, in particular, when the control unit detects that the amount of power which is stored in the buffer energy storage 2b is below the threshold charge level and/or when the control unit detects that the domestic electric grid 3 is disconnected from the power grid 4 and/or in case of a power grid failure. Preferably, the charging cable 5 may comprise a connector 5a, such as seen before, for connecting the charging cable 5 to a socket of the electric vehicle 1.

Preferably, as can be seen in figure 3, the adapter and the control element 6 may be implemented in/on the connector 5a.

Preferably, the adapter may comprise a first resistor R1, and the switch S is adapted to switch to a first state enabling electric current to flow through the first resistor R1 so as to enable the electric vehicle 1 to detect the second supply mode by detecting/measuring the resistor 6a. It also enables initially the electric vehicle 1 to detect charging cable 5 at the moment when the latter is connected to the electric vehicle 1.

Preferably, as can be seen in figure 3, the adapter may comprise a second resistor R2 connected to the switch S. The switch S may be adapted to switch between the first state and a second state, said second state enabling electric current to flow through the second resistor R2 so as to enable the electric vehicle 1 to detect a charging mode (such as the charging mode described above) of the electric vehicle 1 by detecting/measuring the second resistor R2.

The first and second resistors R1, R2 have a given resistance that enable respectively the electric vehicle 1 to detect the second supply mode and the charging mode.

It is understood that the control device comprises the control element 6 and the switch S.

In the alternative embodiment described above which is not depicted in the figures, the control unit may control the switch S to toggle between the second supply mode and the first supply mode.

In figure 3, it can be seen more particularly that the connector 5 comprises a line between the CP/PP line and the PE line (the earth), said line comprising the switch S and the resistor R1, and where applicable a parallel line comprising said switch S and the resistor R2.

Preferably, as can be seen in figure 3, the present invention may provide that the switch S may be closed to establish a connection between CP/PP line and PE line through the resistor R1, which triggers the second supply mode (V2L mode) and that, when the switch S is open, a connection may be established between the CP line and the PE line through the second resistor R2, which enables the charging mode. In operation, when the control element 6 is a push button for example, the operator can control the switch S by pushing the push button 6 to close the switch S and trigger the second supply mode (V2L mode). Obviously, the control of the switch S could be carried out using another type of control element 6 or a remote control element, such as a smartphone, connected for example to the charging station 2.

in the alternative embodiment, when the control unit detects that the amount of power which is stored in the buffer energy storage 2b is below the threshold charge level, the control unit may close the switch S and trigger the second supply mode (V2L mode).

The measured resistance R1, R2 may also include information on maximum load capacity.

The main advantages of this invention include providing a reliable power supply to a domestic electric grid 3 during power grid 4 failure/outage, utilizing the stored energy in an electric vehicle battery. The power supply system ensures continuous operation of the domestic electric grid 3 by recharging the buffer energy storage 2b and switching supply modes as needed. This invention addresses the problem of power outages and enhances the utility of electric vehicles 1 as a backup power source, with and without power grid 4, while allowing the use of energy storages, such as capacitors, which are cheaper and smaller/take up less space.

The present invention has also for its object a method for controlling a vehicle charging station for powering a domestic electric grid, more particularly a house/building domestic electric grid, in a context of powering the domestic electric grid without any connection to a power grid 4 or in a context of powering the domestic electric grid connected to the power grid in case of a power grid 4 failure, the method using such a power supply system as described above.

According to the present invention, the method comprises the following steps for controlling the charging station 2 in a power assembly of the power supply system:
i) initiating powering and recharging of the buffer energy storage 2b with electrical energy stored in the electric vehicle battery 1a using the second supply mode until reaching at least the threshold charge level,
ii) when the threshold charge level is reached, initiating the supply of electrical energy stored in the electric vehicle battery 1a to the domestic electric grid 3 using the first supply mode.

An additional feature of the present invention is that: step i) is initiated by activating, preferably manually, a control element 6, such as a push button, on the electric vehicle charging station 2, on a charging cable 5 connecting the vehicle charging station 2 to the electric vehicle 1 or on a connector 5a of such a charging cable 5 or by activating a remote control apparatus, such as a smartphone. The control element 6 may be a control element as described above. It is clear that the present invention may provide both a control element 6, such as a push button, on the charging cable 5 and a remote control element.

In the alternative embodiment described above not depicted in the figures, step i) may be initiated by the control unit described above, in particular when the control unit detects that the amount of power which is stored in the buffer energy storage 2b is below the threshold charge level.

According to another additional feature of the present invention, the method comprises in step ii): providing a visual and/or audio indication as or when the threshold load level is reached.

Preferably, step i) is executed when the buffer energy storage 2b charge level is below the threshold charge level below which the buffer energy storage 2b charge level is no longer sufficient to power the electronic control circuit 2c.

Preferably, powering and recharging of the buffer energy storage 2b with electrical energy stored in the electric vehicle battery 1a using the second supply mode is stopped before initiating the supply of electrical energy stored in the electric vehicle battery 1 a to the domestic electric grid 3 using the first supply mode.

According to another additional feature of the present invention, in the second supply mode, the power supplied by the electric vehicle 1 using the electrical energy stored in the electric vehicle battery to power the charging station 2 is supplied in the form of alternating current having a phase which is unsynchronized with a phase of the domestic electric grid 3 and/or a phase of the power grid 4.

According to another additional feature of the present invention, in the first supply mode, the power supplied by the electric vehicle 1 using the electrical energy stored in the electric vehicle battery to power the domestic electric grid 3 is supplied in the form of alternating current having a phase which is synchronized with a phase of the domestic electric grid 3 and/or, where applicable (presence of a power grid 4), a phase of the power grid 4.

If we refer to Figure 4, we can see, in operation, for example during a power grid failure and with the buffer energy storage 2b charge level below the threshold charge level, six steps 1 to 6 set up according to the method according to the present invention allowing an operator to recharge the buffer energy storage 2b using the push button 6 on the connector 5a of the charging cable 5 to initiate the second supply mode using the V2L functionality from the electric vehicle 1 to back power the charging station 2 and more particularly the buffer energy storage 2b until the first supply mode using the V2H/V2B functionality can start :
- step 1: the operator presses the push button 6 on the connector 5, which initiates the second supply mode,
- step 2: the electric vehicle 1 starts the second supply mode (V2L) to power and recharge the buffer energy storage 2b with electrical energy stored in the electric vehicle battery using the second supply mode until reaching at least the threshold charge level,
- step 3: the indicator indicates to the operator when the buffer energy storage 2b is charged enough (threshold charge level) for enabling the electronic control circuit 2c of the buffer module 2a to initiate the first supply mode (V2H/V2B),
- step 4: the push button 6 is released, which stops the second supply mode,
- step 5: the charging station 2 initiates the first supply mode (V2H/V2B) with buffer energy storage 2b energy,
- step 6: electric vehicle 1 transmits emergency/back power to the domestic electric grid 3 (house/building).

Of course, the invention is not limited to the embodiment described and shown in the attached drawings. Modifications remain possible, in particular from the point of view of the constitution of the various elements or by substitution of technical equivalents, without departing from the scope of protection of the invention.

## Claims

1. Method for controlling a vehicle charging station for powering a domestic electric grid, more particularly a house/building domestic electric grid, connected to said vehicle charging station, in a context of powering the domestic electric grid without any connection to a power grid or in a context of powering the domestic electric grid connected to the power grid in case of a power grid failure, the method using a power supply system comprising at least a power assembly comprising:
- an electric vehicle (1) comprising a battery,
- an electric vehicle charging station (2) connected to the domestic electric grid (3), more particularly the house/building domestic electric grid, and to the electric vehicle (1) and, where applicable, to a power grid (4),
which charging station (2) comprises an initiating buffer module (2a) comprising a buffer energy storage (2b) and an electronic control circuit (2c) configured to be powered by the buffer energy storage (2b) and configured to initiate, while being powered by the buffer energy storage (2b), the supply of electrical energy stored in the electric vehicle battery to the domestic electric grid (3) according to a first supply mode if the amount of power which is stored in the buffer energy storage (2b) is equal to or above a threshold charge level,
said power supply system being adapted for using the electrical energy stored in the electric vehicle battery to power the charging station (2) according to a second supply mode,
wherein the method comprises the following steps for controlling the charging station (2):
i) initiating powering and recharging of the buffer energy storage (2b) with electrical energy stored in the electric vehicle battery using the second supply mode until reaching at least the threshold charge level,
ii) when the threshold charge level is reached, initiating the supply of electrical energy stored in the electric vehicle battery to the domestic electric grid (3) using the first supply mode.

2. Method according to claim 1, wherein step i) is initiated by activating, preferably manually, a control element (6), such as a push button, implemented on the charging station (2), on a charging cable (5) connecting the charging station (2) to the electric vehicle (1) or on a connector (5a) of such a charging cable 5 or by activating a remote control apparatus, such as a smartphone.

3. Method according to any one of the claims 1 to 2, wherein the method comprises in step ii): providing a visual and/or audio indication as or when the threshold load level is reached.

4. Method according to any one of the claims 1 to 3, wherein step i) is executed when the buffer energy storage (2b) charge level is below the threshold charge level below which the buffer energy storage (2b) charge level is no longer sufficient to power the electronic control circuit (2c).

5. Method according to any one of the claims 1 to 4, wherein powering and recharging of the buffer energy storage (2b) with electrical energy stored in the electric vehicle battery using the second supply mode is stopped before initiating the supply of electrical energy stored in the electric vehicle battery to the domestic electric grid (3) using the first supply mode.

6. Method according to any one of the claims 1 to 5, wherein, in the second supply mode, the power supplied by the vehicle using the electrical energy stored in the electric vehicle battery to power the charging station (2) is supplied in the form of alternating current having a phase which is unsynchronized with a phase of the domestic electric grid (3) and/or a phase of the power grid (4).

7. Method according to any one of the claims 1 to 6, wherein, in the first supply mode, the power supplied by the electric vehicle (1) using the electrical energy stored in the electric vehicle battery to power the domestic electric grid (3) is supplied in the form of alternating current having a phase which is synchronized with a phase of the domestic electric grid (3) and/or a phase of the power grid (4).

8. Power supply system for powering a domestic electric grid, more particularly a house/building domestic electrical grid, in a context of powering the domestic electric grid without connection to a power grid or in a context of powering the domestic electric grid connected to the power grid in case of a power grid failure, the power system comprising at least a power assembly comprising:
- an electric vehicle (1) comprising a battery,
- an electric vehicle charging station (2) connected to a domestic electric grid (3), more particularly a house/building domestic electrical grid, and to the electric vehicle (1) and, where applicable, to a power grid (4),
which charging station (2) comprises an initiating buffer module comprising a buffer energy storage (2b) and an electronic control circuit (2a) configured to be powered by the buffer energy storage (2b) and configured to initiate, while being powered by the buffer energy storage (2b), the supply of electrical energy stored in the electric vehicle battery (1a) to the domestic electric grid (3) according to a first supply mode when the amount of power which is stored in the buffer energy storage (2b) is above a threshold charge level,
wherein the power assembly:
- is adapted to supply the charging station (2) with electrical energy stored in the electric vehicle battery (1a) according to a second supply mode for powering and recharging the buffer energy storage (2b) with electrical energy stored in the electric vehicle battery,
- and comprises a control device for initiating recharging the buffer energy storage (2b) using the second supply mode,
and wherein the electric vehicle (1) is adapted for use in the first and second supply modes.

9. Power system according to claim 8, wherein the control device comprises a control element (6), such as a push button, for initiating the second supply mode, said control element (6) being located on the charging station (2), on a charging cable (5) of the power system connecting the vehicle charging station (2) to the electric vehicle (1) or on a connector (5a) of the charging cable (5).

10. Power system according to anyone of the claims 8 or 9, wherein the charging station (2) comprises an indicator configured to indicate visually and/or acoustically when the threshold load level is reached.

11. Power system according to anyone of the claims 8 to 10, wherein the charging station (2) comprises a selector (2c) connected to the electronic control circuit (2a) and controlled by the latter to enable the charging station (2) to switch from:
- an operation mode corresponding to a charging mode of the electric vehicle (1) when the charging mode is detected by the electric vehicle (1) or to the second power supply mode when the second power supply mode is initiated by the control device,
- to an operation mode corresponding to the first power supply mode.

12. Charging cable (5) for a power supply system according to any one of the claims 8 to 11, said charging cable (5) being adapted to connect, in the power assembly of said power supply, the electric vehicle (1) to the charging station (2),
wherein said charging cable (5):
- is adapted to enable the transfer of electrical energy from the electric vehicle (1) to the charging station (2) according to the first and second supply modes,
- comprises an adapter enabling the electric vehicle (1) to detect the second supply mode when the second supply mode is initiated by the control device of the power assembly.

13. Charging cable (5) according to claim 12, wherein it comprises the control device, said control device comprising a control element (6), such as a push button, and a switch (S) controlled by the control element (6) for initiating the second supply mode.

14. Charging cable (5) according to claim 13, wherein it comprises a connector (5a) for connecting the charging cable (5) to a socket of the electric vehicle (1) and wherein the adapter, the control element (6) and the switch (S) are implemented in/on the connector (5a).

15. Charging cable (5) according to anyone of the claims 13 or 14, wherein the adapter comprises a first resistor (R1) and the switch (S) is adapted to switch to a first state enabling electric current to flow through the first resistor (R1) so as to enable the electric vehicle (1) to detect the second supply mode by detecting/measuring the first resistor (R1), the adapter preferably comprising an second resistor (R2) connected to the switch (S), said switch being adapted to switch between the first state and a second state enabling electric current to flow through the second resistor (R2) so as to enable the electric vehicle (1) to detect a charging mode of the electric vehicle (1) by detecting/measuring the second resistor (R2).
